# EUROPEAN PATENT APPLICATION

(11) **EP 4 501 799 A1**
(43) Date of publication of application: **05.02.2025**
(21) Application number: 23188727.4
(22) Date of filing: 31.07.2023
(51) Int. Cl.: B64F 5/10, B64C 1/06

(54) **METHOD OF PRODUCING AN AIRCRAFT SECTION AND ASSOCIATED AIRCRAFT**

(71) Applicant: Airbus Operations GmbH, 21129 Hamburg (DE)
(72) Inventor: Frankenberger, Eckart, 21129 Hamburg (DE)
(74) Representative: Schornack, Oliver

(57) **Abstract**

The present disclosure relates to a method of producing an aircraft section (10). The method comprises providing (S510) at least one frame (110) and a panel (105), and assembling (S520) a subcomponent (100) by mounting the at least one frame to the panel. The at least one frame and the panel have a circumferential extension corresponding to only a portion of the circumference of the aircraft section. Further, the assembling (S520) is performed multiple times to achieve a plurality of subcomponents (100), and the method further comprises placing (S530) a plurality of reference markers (112) in or on each of the assembled subcomponents (100), and assembling (S550) the aircraft section (10) by positioning each of the subcomponents relative to another one of the subcomponents employing the plurality of reference markers (112), and mounting the plurality of subcomponents (100) together using friction stir welding. Furthermore, disclosed is also an aircraft comprising a plurality of aircraft sections manufactured by such method.

## Description

The present disclosure generally relates to a method of producing an aircraft section and an associated aircraft comprising a plurality of such produced aircraft sections. Particularly, the present disclosure relates to a method of producing an aircraft section by assembling a plurality of preassembled subcomponents consisting of at least one frame and a panel forming only a portion of a circumference of the aircraft section. The present disclosure further relates to an aircraft comprising a plurality of such aircraft sections.

A conventional production of an aircraft section, particularly a fuselage section, includes a single part production, such as frames, clips, crossbeams, struts, etc.. In a traditional assembly sequence, frames are attached to the skin panels using clips, before the panels are assembled to full sections by longitudinal joining.

For instance, lower and side skin panels are positioned around the pre-assembled floor-grid including cross-beams and seat rails, which defines the reference level of the section. During this integration of the floor-grid together with vertical Z-struts to the panels many assembly operations are performed with difficult access and body posture for working staff. Moreover, this assembling requires a large and expensive geometrical station with positioning systems including metrology and many platforms and stairs to provide access.

After such an aircraft section is completed or when a plurality of aircraft sections were attached to one another in a longitudinal direction of the aircraft, further components are mounted therein, such as crash-panels between floor and stringers or cargo lining substructures around the Z-struts and cargo floor with lower framework attached to the lower frames. Brackets are installed on the frames, cross-beams and z-struts. Thereby, the workers have kneel in the cargo area, bending down on the passenger level or climbing up to attach hat rack brackets in the upper frames. Usually, a surface protection is applied to the aircraft section after joining sections to larger fuselage part.

As indicated, all these manufacturing steps involve manual working steps. Due to the round cross-section of the aircraft section, however, such manual work takes place in difficult ergonomic situations for the workers. As a mere example, a difficult ergonomic assembly is the floor cross beam to frame attachment and the Z-strut attachment to the frame. Both operations include drilling and riveting in a delimited space underneath the floor cross beam, particularly in a triangle area delimited by the frame, cross beam and Z-strut. Likewise, in the crown area and the cargo floor (bottom) area, the working space is limited and ergonomically difficult to reach.

It is therefore an object of the present disclosure to provide an improved method of producing an aircraft section, particularly to simplify production of the aircraft section.

This object is solved by the present invention as defined in the independent claims. Preferred embodiments are defined by the dependent claims.

According to a first aspect to better understand the present disclosure, a method of producing an aircraft section comprises providing at least one frame and a panel, and assembling a subcomponent by mounting the at least one frame to the panel. A subcomponent in the present disclosure refers to an aircraft element consisting of the at least one frame and the panel mounted thereto. It is to be understood that a subcomponent may comprise additional elements. A panel refers to a two-dimensional sheet-like element or component of the aircraft, for example, a portion of the outer skin of the fuselage of the aircraft.

Furthermore, the at least one frame and the panel have a circumferential extension corresponding to only a portion of the circumference of the aircraft section. In the present disclosure an aircraft section refers to a circumferentially complete portion of an aircraft fuselage, i.e., a 360°-complete cross-section of the fuselage. The at least one frame is arranged in the cross-sectional plane of the aircraft section, and the aircraft section can have any longitudinal extension covering the at least one frame. The subcomponent can already have the longitudinal extension of the aircraft section, but in a circumferential direction the subcomponent forms only a part of the complete circumference of the aircraft section.

In the disclosed method, the assembling is performed multiple times to achieve a plurality of subcomponents. The provision of assembled subcomponents allows easier handling of such subcomponents, so that any work at or on such subcomponent can be performed in an ergonomically ideal position. For instance, the subcomponent can be brought into a position that is ergonomically ideal for the work to be performed. The positioning of the subcomponent is not only advantageous from an ergonomic standpoint, but also from an accessibility standpoint, such as for a robot, and/or a tool to be brought to the right location at the subcomponent. For example, the subcomponent could be a frame segment with a cross-beam part and a Z-strut being pre-assembled or a frame with a lower framework and cargo cross-beam.

Furthermore, the assembling of subcomponents allows pre-manufacturing of such subcomponents, so that a timely and/or spatial separation of subcomponent manufacturing and aircraft section assembly can be achieved. This allows a more efficient manufacturing of the subcomponents (e.g., even as integrated parts) and, hence, of the aircraft section.

A minimum of two subcomponents is required to form an aircraft section, i.e. a subcomponent can form 180° of the circumference of the aircraft section. If the number of subcomponents forming a complete circumference of the aircraft section is greater than two, each subcomponent can be handled and better ergonomic conditions can be achieved for the workers. Thus, four subcomponents forming a complete circumference of the aircraft section is preferred, and six subcomponents is most preferable.

The method further comprises placing a plurality of reference markers in or on each of the assembled subcomponents, and assembling the aircraft section by positioning each of the subcomponents relative to one another employing the plurality of reference markers, and mounting the plurality of subcomponents together using friction stir welding or another precise adjoining technology (e.g., magnetic pulse welding).

The provision of reference markers together with friction stir welding allows increased precision of the overall aircraft section. Specifically, each subcomponent can be positioned relative to the other subcomponent(s) of the aircraft section in a very precise manner using the reference markers. By employing friction stir welding, the edges of adjacent subcomponents, for example, the edges of the panels and/or the frames, can be modified in order to increase precision. Thus, the aircraft section can be produced with significantly reduced tolerances, for example, along a longitudinal direction of the aircraft (a direction along the frames and perpendicular to the cross-sectional plane of the aircraft section) and/or in a circumferential direction and/or in a cross-sectional direction. In conventional manufacturing techniques, tolerances will add up from frame to frame, which has to be compensated over the entire length of the aircraft. Employing subcomponents and friction stir welding when connecting the subcomponents "resets" the tolerances with each subcomponent or, in the longitudinal direction, at least with each aircraft section.

In an implementation variant, the method can further comprise positioning a floor module in the assembled aircraft section, and attaching the floor module to the at least one frame. Since the subcomponents and the aircraft section are manufactured with significantly reduced tolerances, the connecting points between the floor module and each frame are positioned with much higher precision. Specifically, the reference level for the floor module at each frame (e.g., a triangle frame) is precise enough that the floor module can simply be placed and mounted to the frame (e.g., a crossbeam part of a triangle frame). Therefore, the floor module does not need to be provided or installed with tolerance compensating mounting elements. This significantly decreases the working time for installing the floor module and further decreases the weight of the floor, as less elements are required for the floor.

In a further implementation variant, the method can further comprise applying a surface protection on the assembled subcomponent before the assembling of the aircraft section. As a mere example, such surface protection can be a corrosion prevention compound (CPC), an insulating material, a heat protection material, or the like. Since the surface protection is applied to the subcomponent, the surface of the associated elements can be easier reached compared to applying a surface protection to a completed aircraft section. In other words, in conventional surface protection application techniques the associated surfaces are difficult to reach, which leads to complicated manual work in difficult ergonomic positions for the workers. In addition, a protection of workers including artificial and/or secondary respiration can be avoided. Applying the surface protection to the assembled subcomponents allows easy and open access to the surfaces and further allows automation of the application process, such as using a standard robot, and/or simplified automation.

In another implementation variant, each of the assembling steps can be automatically performed using at least one robot. The use of at least one robot is possible due to the intermediate assembling of subcomponents. Specifically, a robot can handle a panel as well as a preassembled subcomponent, including a frame, and the robot (or another robot) can perform mounting the at least one frame to the panel. For instance, such mounting can be performed using drilling, riveting, welding, bonding, adhering or the like.

Likewise, the assembling of the aircraft section from a plurality of subcomponents can be achieved by robots. For instance, a robot can handle a subcomponent, for example, by holding the subcomponent at the panel (e.g., using vacuum or suction cups). Alternatively or additionally, a subcomponent or two subcomponents to be mounted to one another can be placed in a precise rack, where they are mounted to one another using friction stir welding.

In an implementation variant, the assembling of the aircraft section can comprise milling one or more edges of the panel of one or more subcomponents before the friction stir welding. The milling is performed relative to the plurality of reference markers. In other words, by milling or otherwise machining one or more edges of the panel relative to the reference markers, a precisely sized subcomponent can be provided. This reduces the tolerances of the resulting aircraft section once the subcomponents are mounted to one another.

When preparing the one or more edges of the panel by milling or machining, the subcomponent can be aligned relative to the completed aircraft section, i.e. relative to the other subcomponents. This is particularly relevant for the frames or other elements integrated or connected to the subcomponent. As a mere example, the mounting points for a floor module, a crown component, a cargo floor component, or the like can be precisely positioned.

Alternatively or additionally, a frame of the subcomponent can likewise be milled or machined or press-formed. For example, the frame of the subcomponent can be milled or machined at a side, surface or edge, where it is connected to another subcomponent. The milling or machining will likewise be performed relative to the plurality of reference markers (of both to-be-connected subcomponents)

As a mere example, the assembling of the aircraft section can be performed in a machine-assisted, particularly robot-assisted, station. Thus, the interior as well as the exterior of the aircraft section can be reached during assembling of the aircraft section. This facilitates using friction stir welding or another precise joining method for mounting the subcomponents to one another.

In another implementation variant, the method can further comprise attaching at least one item of the group consisting of a clip, a stringer, a mounting bracket, and a crown bracket to the at least one frame or to the panel before assembling the subcomponent. Particularly, such item can be easily attached to the frame or the panel in a state where the frame and the panel are not mounted to one another.

It is to be understood that instead of attaching the at least one item, the item can be integrated with the frame and/or panel. In other words, when manufacturing the frame and/or panel, the at least one item can already be provided and form part of the frame and/or panel.

Furthermore, attaching can comprise positioning and aligning the at least one frame and the at least one item. This allows automation of attaching the frame and the item, for example, using one or more robots.

In yet another implementation variant, the providing of the at least one frame can comprise providing at least one integrated frame including a circumferentially extending frame section, and at least one item of the group consisting of a cross beam section, a Z-strut, a horizontal bracket, a cargo floor beam, a cargo floor strut, and a clip. For instance, the cross beam section can be configured to receive a floor module mount. Alternatively, the cross beam section can include a floor module mount. The floor module mount is configured to connect a floor module to the cross beam section.

In case of a cross beam section and/or a Z-strut, the method further allows simplification of the floor module. Particularly, the floor module can be designed to span only between the (free) and the cross beam sections and/or Z-struts on both sides of the aircraft section. This not only reduces complexity and weight of the floor module, but further facilitates handling the floor module (particularly due to its lower weight compared to a floor module spanning the entire aircraft section).

Taking into account the increased precision of the aircraft section, the positions of the frame as well as the at least one item are also precise. This allows simplification of any component depending on the position of the frame and/or the at least one item, such as the floor module, an overhead rack, a crown module or the like.

In another implementation variant, the providing of the at least one integrated frame can comprise press-forming, milling, blow moulding, or friction stir welding the frame section and the at least one item to a one-piece frame. In other words, conventionally produced single parts can be integrated into a one-piece frame, which not only reduces the number of components during production of the aircraft section, but also reduces the weight as no connecting elements (e.g., fasteners) have to be applied.

As a mere example, in an upper frame section, such as the crown part of the aircraft section, one or more brackets can be integrated to the frame. Such brackets may allow mounting equipment, installations, pipes, lines, et cetera to the frame. Likewise, in the side parts of the aircraft section, particularly where the floor module will be mounted, a portion of the cross beam and/or the Z-strut (i.e., the triangle area) can be integrated into the frame. This allows reducing the overall length of the floor module, which due to the high precision of the aircraft section may further be easily placed and mounted to the integrated frame. Furthermore, a horizontal bracket can be integrated into the frame. Such horizontal bracket can be mounted to an adjacent frame to transfer loads acting in a longitudinal direction of the aircraft, such as from the floor and/or cross beam into the frame structure. It is further possible to integrate a cargo floor, cargo grid or lower framework into the frame. This allows omission of any additional cargo floor component.

In a further implementation variant, the providing of the panel and/or the assembling of the subcomponent can comprise providing a plurality of panels and connecting the plurality of panels together using friction stir welding. In other words, the subcomponent can comprise a plurality of panels connected to one another using friction stir welding. This may allow easier transportation of the elements forming a subcomponent and/or an aircraft section, which reduces overall costs.

As a mere example, the at least one frame can span over multiple of the plurality of connected panels. Since the panels have a curved shape, they are more bulky than other elements forming a subcomponent and/or an aircraft section. Thus, reducing the size of the initial panels facilitates handling of all elements and assembling the subcomponent.

According to a second aspect to better understand the present disclosure, an aircraft comprising a plurality of aircraft sections manufactured by the method of the first aspect or one of its variants.

The present disclosure is not restricted to the aspects and variants in the described form and order. Specifically, the description of aspects and variants is not to be understood as a specific limiting grouping of features. It is to be understood that the present disclosure also covers combinations of the aspects and variants. Thus, each variant or optional feature can be combined with any other aspect, variant, optional feature or even combinations thereof.

In the following, the present disclosure will further be described with reference to exemplary implementations illustrated in the figures, in which:
- Figure 1: schematically illustrates a flow diagram of a method of producing an aircraft section;
- Figure 2: schematically illustrates a panel for an aircraft section;
- Figure 3: schematically illustrates a first exemplary subcomponent for an aircraft section;
- Figure 4: schematically illustrates a second exemplary subcomponent for an aircraft section;
- Figure 5: schematically illustrates a surface protection station for applying a surface protection to a subcomponent;
- Figure 6: schematically illustrates a plurality of subcomponents for forming an aircraft section;
- Figures 7-9: schematically illustrate exemplary integrated frames; and

In the following description, for purposes of explanation and not limitation, specific details are set forth in order to provide a thorough understanding of the present disclosure. It will be apparent to one skilled in the art that the present disclosure may be practised in other implementations that depart from these specific details.

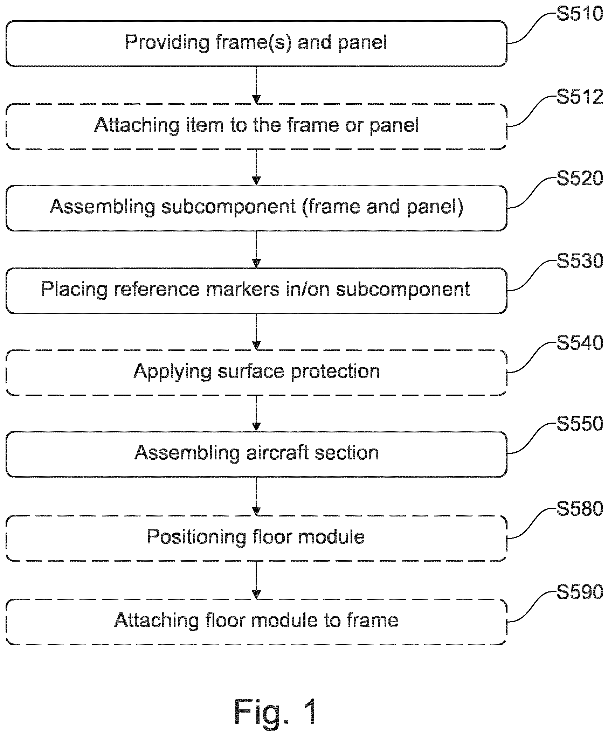

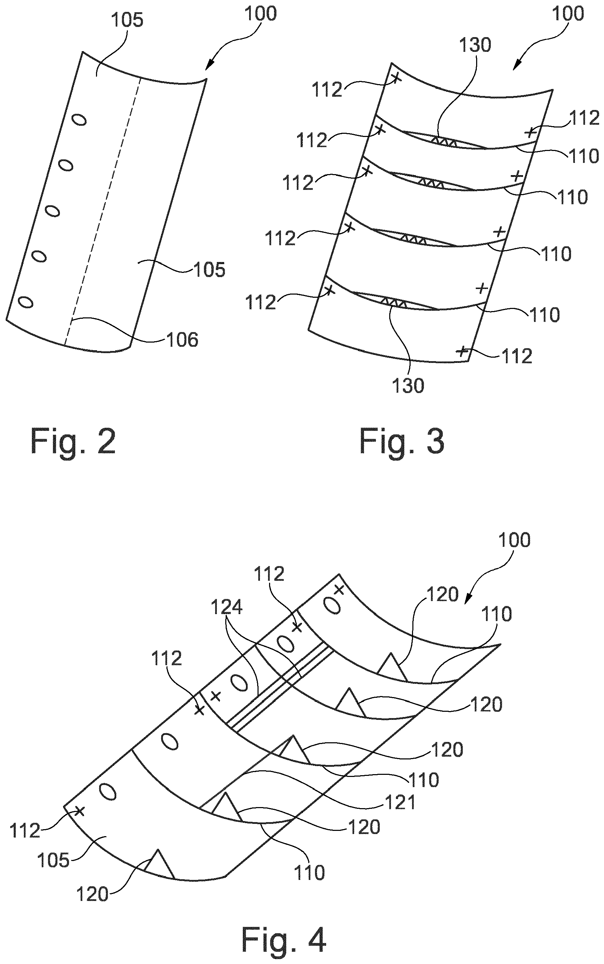

Figure 1 schematically illustrates a flow diagram of a method of producing an aircraft section 10. The method will be explained in view of Figures 2 to 6 schematically illustrating elements, parts, subcomponents and intermediate states during production of an aircraft section 10.

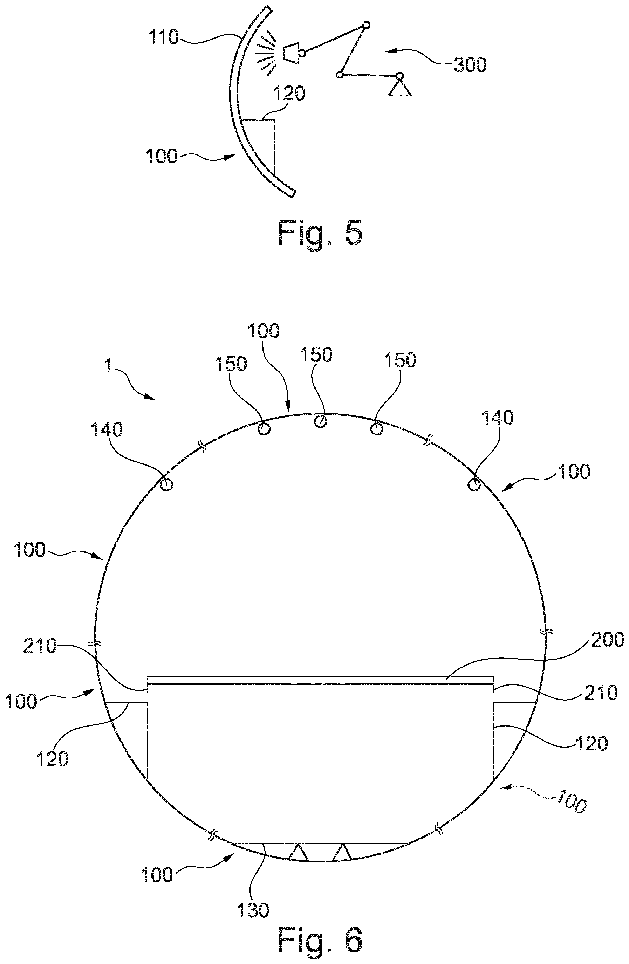

The method begins in step S510 with providing at least one frame 110 and a panel 105, which are mounted to one another in an assembling step S520 to form a subcomponent 100. Exemplary subcomponents 100 are illustrated in Figures 3, 4 and 6, including a bottom area or cargo floor area (Figure 3), a triangle area (Figure 4) and an upper area or crown area (Figure 6). The assembling can take place on the basis of one or more panels 105.

For instance, Figure 2 illustrates an exemplary panel 105 for an aircraft section 10, such panel 105 can form an outer skin of an aircraft or similar shell-like structure. As can be derived from Figure 2, more than one panel 105 can be connected to one another, such as by welding both panels 105 along a connecting edge or weld line 106. An exemplary welding technique can be friction stir welding. The connecting of multiple panels 105 allows easier preparation, handling and transporting of each panel 105 due to its smaller size.

In any case, at least one frame 110 is mounted to a panel 105 as it is schematically illustrated in Figures 3 and 4, and together form a subcomponent 100. For example, a frame 110 is a circumferentially arranged component of the aircraft section 10, that will be arranged in a cross-section of the aircraft section 10 or aircraft 1 as illustrated in Figure 6. The at least one frame 110 and the panel 105 have a circumferential extension corresponding to only a portion of the circumference of the aircraft section 10. Thus, the subcomponent 100 also forms only a portion of the circumference of the aircraft section 10. This allows easier preparation, handling and transporting of each subcomponent 100 due to its smaller size compared to the entire aircraft section 10.

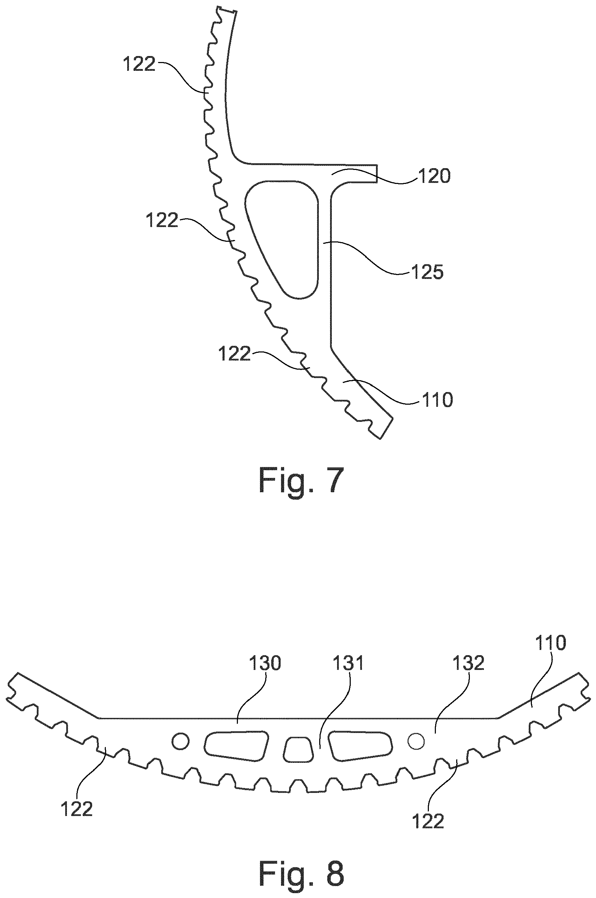

When providing the frame 110 at least one integrated frame can be provided. Such integrated frame 110 can include a circumferentially extending frame section 110 and at least one item, particularly a structural item. Such structural item(s) can be of the group consisting of a cross beam section 120, a Z-strut 125 (Figure 4), a horizontal bracket 121, a cargo floor beam 130, a cargo floor strut 131 and a clip 122 (Figures 7 and 8). The integrated frame 110 can be made by press forming, milling, blow moulding and/or friction stir welding. In any case, the integrated frame 110 can be a one-piece component.

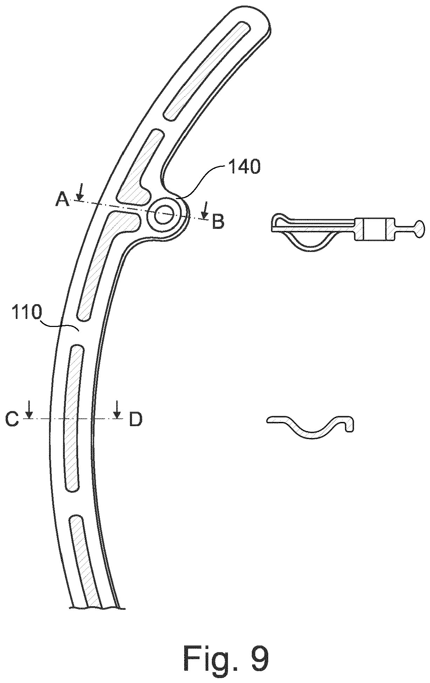

The method of Figure 1 can continue in an optional step S512 with attaching at least one item to the at least one frame 110 or to the panel 105. The at least one item can be of the group consisting of a clip 122, a stringer 124, a mounting bracket 140 (Figures 6 and 9), and a crown bracket 150 (Figure 6). The at least one item can be positioned and aligned relative to the at least one frame 110 or to a position at the panel 105. The attaching of the at least one item can be performed by adhering, welding, riveting and/or screwing. Alternatively or additionally, the at least one item can be integrated into the frame 110 or the panel 105, so that the items and the frame 110 or panel 105 forms a one-piece component.

The method continues in step S520 with assembling a subcomponent 100 by mounting the at least one frame 110 to the panel 105. This assembling can be performed by a robot 300 (Figure 5) or at least under support of a robot 300. Furthermore, step S520 can be performed multiple times to produce a plurality of subcomponents 100.

Thereafter, in step S530 a plurality of reference markers 112 (Figures 3 and 4) are placed in or on each of the assembled subcomponents 100. The reference markers 112 can be placed on a panel 105 and/or a frame 110. Placing the reference marker 112 in the subcomponent 100 can include drilling or riveting. Thus, the marker 112 can be an optical marker for visual identification and/or a spatial marker that can be used to insert a corresponding reference element of an assembling facility (not illustrated). In any case, the reference markers 112 allow positioning and aligning each subcomponent 100 in a precise manner before producing the aircraft section 10.

A further optional step S540 can include applying a surface protection on the assembled subcomponent 100. Such surface protection can be a corrosion prevention compound (CPC), a heat insulation, and/or a moisture barrier. The applying of the surface protection can likewise be performed by a robot 300, as illustrated in Figure 5. Due to the small size of the subcomponent 100 the surface of the subcomponent 100 is easily accessible, so that automation can be employed and manual work in ergonomically difficult positions can be avoided.

Furthermore, in step S550 an aircraft section 10 is assembled by positioning each of the plurality of subcomponents 100 relative to one another employing the plurality of reference markers 112, and mounting the plurality of subcomponents 100 together. Thus, the reference markers 112 allow a precise aligning and positioning of each subcomponent 100. The mounting of the subcomponents 100 can be performed, for example, by friction stir welding or another welding technique. Friction stir welding allows welding and at the same time removing of material from the panel 105 and/or frame 110 along the weld line.

Moreover, the assembling of the aircraft section 10 can also be automated, for example, including a robot 300 performing the positioning and aligning and/or the mounting. The assembling step S550 can further be performed in a machine-assisted, particularly robot-assisted, station.

For instance, the assembling in step S550 can comprise milling one or more edges of the panel 105 of one or more of the subcomponents 100 before performing the friction stir welding. The milling can likewise be performed relative to the plurality of provided reference markers 112.

Thus, the entire aircraft section 10, i.e. the full circumference of an aircraft fuselage, can be produced in a very precise manner.

The method can optionally continue with step S580 positioning a floor module 200 (Figure 6) in the assembled aircraft section 10, and with step S590 attaching the floor module 200 to the at least one frame 110. For instance, a floor module mount 210 can be provided at the floor module 200 (as illustrated in Figure 6) and/or at the frame 110 and/or a cross beam section 120. The floor module mount 210 allows simple attachment of the floor module 200 to the frame 110 or cross beam section 120 and can be provided as a simple component. This is due to reduced tolerances due to the increased precision of the aircraft section 10 and particularly the high precision of the location of the frames 110 and the cross beam sections 120.

Turning back to Figure 2, a panel 105 can be provided by connecting a plurality of panels 105 together, for example, using friction stir welding. In such a case, the at least one frame 110 can span over multiple such panels 105 and/or over multiple of already connected panels 105.

Figure 4 further illustrates a bracket 121 connecting a triangle area, particularly a cross beam section 120 to an adjacent frame 110, i.e. a frame 110 being different from the frame 110, where the cross beam section 120 is provided. This allows transferring horizontal loads from frame to frame.

Figure 4 also illustrates a plurality of stringers 124, which can also span between two adjacent frames 110. Such stringers 124 can be provided after assembling the subcomponent 100 or can already be provided on the panel 105 before mounting the at least one frame 110 to the panel 105.

Figure 5 illustrates a robot 300, that is exemplarily equipped with a spray nozzle or similar component. The spray nozzle can be used to apply a surface protection to the subcomponent 100. It is to be understood that the robot 300, which can be any kind of robot, such as a 3 axis robot or 5 degrees of freedom robot or the like, can also be employed to handle a panel 105, a frame 110, a subcomponent 100 or other element during providing or assembling steps (such as in steps S510, S512, S520, S530, S550).

Furthermore, with respect to Figure 6 the aircraft section 10 is illustrated with a separation between each subcomponent 100. This is to be understood as for explanatory reasons only, in order to identify each subcomponent 100. At each "gap" a connect line, such as a weld line, will be provided. As can be derived from Figures 2 to 6, the major part of the connect line is present in an area, where only the respective panels 105 are contacting one another and a pair of frames 110 is to be connected. Thus, connecting can be easily performed on an automated basis, such as by a robot. For instance, connecting can be performed by friction stir welding.

Figures 7 to 9 schematically illustrate exemplary integrated frames 110. Figure 7 for example, shows an integrated frame 110 having a circumferentially extending frame section 110, a cross beam section 120 (that will be arranged on a level of a cabin floor and/or forms a portion of the cabin floor), a Z-strut 125 and a plurality of clips 122. This one-piece frame 110 can be easily mounted to a panel 105 due to the integrated clips 122.

Figure 8 shows an integrated frame 110 having a circumferentially extending frame section 110, a cargo floor beam 130 and a plurality of cargo floor struts 131. Likewise, a plurality of clips 122 can be provided and integrated into the frame 110. This integrated frame 110 can be mounted to the integrated frame of Figure 7 (on each end). Furthermore, a widened section 132 can be provided, that forms the Y-shaped connection between cargo floor beam 130 and circumferentially extending frame section 110.

Figure 9 illustrates a further exemplary integrated frame 110 having a circumferentially extending frame section 110 and an attached item, particularly a mounting bracket 140, and exemplary cross sections between lines A-B and C-D. This frame 110 can be provided, for example, above the subcomponent of Figure 7. As can be further derived from Figure 9, the integrated frame 110 can be formed from a sheet-like material, for example, by press forming, in order to achieve different cross-sectional shapes and further to include the (integrated) mounting bracket 140.

It is believed that the advantages of the technique presented herein will be fully understood from the foregoing description, and it will be apparent that various changes may be made in the form, constructions and arrangement of the exemplary aspects thereof without departing from the scope of the disclosure or without sacrificing all of its advantageous effects. Because the technique presented herein can be varied in many ways, it will be recognized that the disclosure should be limited only by the scope of the claims that follow.

## Claims

1. A method of producing an aircraft section (10), the method comprising:
providing (S510) at least one frame (110) and a panel (105); and
assembling (S520) a subcomponent (100) by mounting the at least one frame to the panel,
**characterised in that**
the at least one frame and the panel have a circumferential extension corresponding to only a portion of the circumference of the aircraft section,
the assembling (S520) is performed multiple times to achieve a plurality of subcomponents (100), and
the method further comprises:
placing (S530) a plurality of reference markers (112) in or on each of the assembled subcomponents (100); and
assembling (S550) the aircraft section (10) by positioning each of the subcomponents relative to another one of the subcomponents employing the plurality of reference markers (112), and mounting the plurality of subcomponents (100) together using friction stir welding.

2. The method of claim 1, further comprising:
positioning (S580) a floor module (200) in the assembled aircraft section (10); and
attaching (S590) the floor module (200) to the at least one frame (110).

3. The method of claim 1 or 2, further comprising:
applying (S540) a surface protection, preferably a corrosion prevention compound, on the assembled subcomponent before the assembling (S550) of the aircraft section.

4. The method of one of claims 1 to 3, wherein each of the assembling steps (S520, S550) is automatically performed using at least one robot.

5. The method of one of claims 1 to 4, wherein the assembling (S550) of the aircraft section comprises milling one or more edges of the panel (105) of one or more subcomponents before the friction stir welding, the milling being performed relative to the plurality of reference markers (112),
wherein, preferably, the assembling (S550) of the aircraft section is performed in a machine-assisted, particularly robot-assisted, station.

6. The method of one of claims 1 to 5, further comprising:
attaching (S512) at least one item of the group consisting of a clip (122), a stringer (124), a mounting bracket (140), and a crown bracket (150) to the at least one frame or to the panel before assembling (S520) the subcomponent (100),
wherein, preferably, attaching (S512) comprises positioning and aligning the at least one frame and the at least one item.

7. The method of one of claims 1 to 6, wherein the providing (S510) of the at least one frame (110) comprises providing at least one integrated frame including a circumferentially extending frame section, and at least one item of the group consisting of a cross beam section (120), a Z-strut (125), a horizontal bracket (121), a cargo floor beam (130), a cargo floor strut (131), and a clip (122), and
wherein the cross beam section is configured to receive a floor module mount (210).

8. The method of claim 7, wherein the providing (S510) of the at least one integrated frame (110) comprises press-forming, milling, blow moulding, or friction stir welding the frame section and the at least one item to a one-piece frame.

9. The method of one of claims 1 to 8, wherein the providing (S510) of the panel (105) and/or the assembling (S520) of the subcomponent (100) comprises providing a plurality of panels (105) and connecting the plurality of panels (105) together using friction stir welding, and
wherein, preferably, the at least one frame (110) spans over multiple of the plurality of connected panels.

10. An aircraft (1) comprising a plurality of aircraft sections (10) manufactured by the method of one of claims 1 to 9.
